# EUROPEAN PATENT APPLICATION

(11) **EP 2 672 128 A1**
(43) Date of publication of application: **11.12.2013**
(21) Application number: 13170582.4
(22) Date of filing: 05.06.2013
(51) Int. Cl.: F16B 7/14

(54) **Locking device for pipe member**

(30) Priority: 05.06.2012 KR 20120060649
(71) Applicant: Samsung Medison Co., Ltd., Gangwon-do 250-870 (KR)
(72) Inventor: Ko, Jae Yong, Seoul (KR); Woo, Kyeong Gu, Gyeonggi-do (KR)
(74) Representative: Lorenz, Markus

(57) **Abstract**

A locking device for a pipe member includes a pipe member, a moving member, a locking member. At least a portion of the moving member is slidably disposed into the pipe member. The locking member is coupled to an end portion of the moving member. The locking member is made of an elastically deformable material and has an outer circumferential surface supported by an inner surface of the pipe member. When external force is transmitted to the locking member, the locking member is elastically deformed and is decreased in diameter. Accordingly, the moving member may be easily moved.

## Description

### BACKGROUND

A locking device for a pipe member is used in a structure including a pipe member and a moving member slidably mounted in the pipe member so as to fix the moving member to a desired position of the pipe member. Such a locking device for a pipe member may function as a height adjustment device or the like in various pieces of machinery.

A user may adjust a length of the moving member extended outside the pipe member by moving the moving member to a desired position in an unlocked state and restricting movement of the moving member by locking the same using the locking device for a pipe member.

In general, a locking device for a pipe member uses springs, hooks or the like. However, such a structure requires too many components and too many processes of forming holes or slots at a pipe member or a moving member in order to bear force applied thereto. Therefore, a conventional locking device for a pipe member may entail complicated manufacturing processes and diminution of strength of a pipe member or a moving member.

### SUMMARY

An aspect of the present inventive concept relates to a locking device for a pipe member having a simpler structure.

Additional aspects of the inventive concept will be set forth in part in the description which follows and, in part, will be obvious from the description, or may be learned by practice of the inventive concept.

One aspect of the present inventive concept encompasses a locking device for a pipe member including a pipe member, a moving member, and a locking member. At least a portion of the moving member is slidably inserted into the pipe member. The locking member is coupled to an end portion of the moving member. The locking member is made of an elastically deformable material and has an outer circumferential surface supported by an inner surface of the pipe member. When external force is transmitted to the locking member, the locking member is elastically deformed and is decreased in diameter.

The locking device for a pipe member may further include a transmitting member formed in a ring shape, the transmitting member being slidably mounted around the moving member and connected to the locking member in order to transmit the external force to the locking member, and a cable connected to the transmitting member in order to transmit the external force to the transmitting member.

The locking member may include a locking part configured to separate from the inner surface of the pipe member while being elastically deformed and decreased in diameter.

The locking part may have an arc-shaped cross-section which protrudes outwardly such that the locking part is elastically deformed.

The locking part may have a larger diameter than an inner diameter of the pipe member so as to be supported by the inner surface of the pipe member in an elastically deformed state.

The locking member may include a first inserting protrusion disposed at a first end of the locking member to be connected to the moving member, and a second inserting protrusion disposed at a second end of the locking member so as to be connected to the transmitting member. The moving member may include a first slot such that the first inserting protrusion is inserted in and engaged with the first slot, and the transmitting member may include a second slot such that the second inserting protrusion is inserted in and engaged with the second slot.

As described above, the locking device for a pipe member may achieve movement of the moving member in a simple manner of separating the outer circumferential surface of the locking member from the inner surface of the pipe member by transmitting external force to the elastically deformable locking member so that the locking member is decreased in diameter.

### BRIEF DESCRIPTION OF THE DRAWINGS

The foregoing and other features of the inventive concept will be apparent from more particular description of embodiments of the inventive concept, as illustrated in the accompanying drawings in which like reference characters may refer to the same or similar parts throughout the different views. The drawings are not necessarily to scale, emphasis instead being placed upon illustrating the principles of the embodiments of the inventive concept. In the drawings, the thickness of layers and regions may be exaggerated for clarity.
FIG. 1 is a sectional view showing a locking device for a pipe member according to an embodiment of the present inventive concept.
FIG. 2 is an exploded perspective view showing a locking device for a pipe member according to an embodiment of the present inventive concept.
FIGS. 3 through 5 are sectional views showing operation of the locking device for a pipe member according to an embodiment of the present inventive concept.

### DETAILED DESCRIPTION

Examples of the present inventive concept will be described below in more detail with reference to the accompanying drawings. The examples of the present inventive concept may, however, be embodied in different forms and should not be construed as limited to the examples set forth herein. Like reference numerals may refer to like elements throughout the specification.

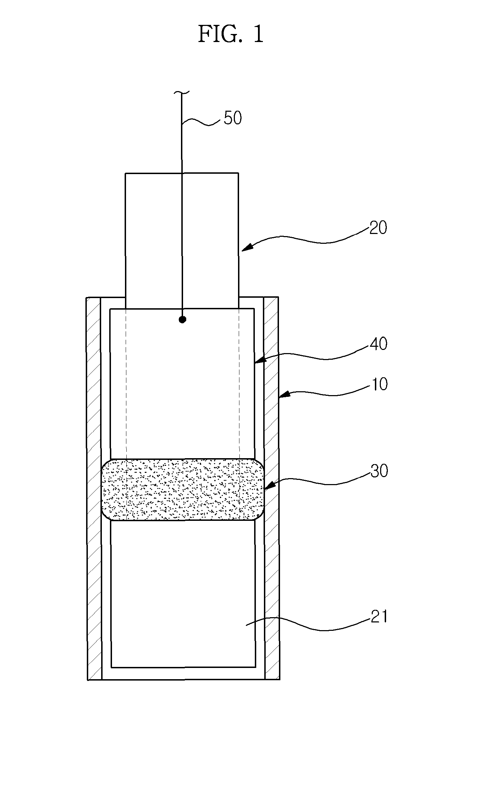

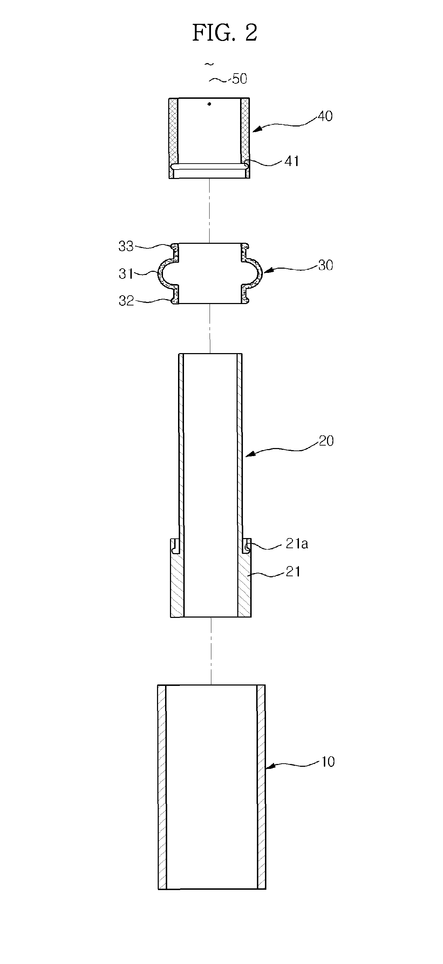

As shown in FIGS. 1 and 2, a locking device for a pipe member according to an embodiment of the present inventive concept may include a pipe member 10, a moving member 20 slidably inserted into the pipe member 10, a locking member 30 mounted to an end portion of the moving member 20 located inside the pipe member 10 in order to selectively allow the moving member 20 to move in the pipe member 10, a transmitting member 40 to dispersedly transmit external force to the locking member 30, and a cable 50 to connect the transmitting member 40 to an external handle (not separately shown) or the like in order to transmit the force applied by a user to the transmitting member 40.

The pipe member 10 may be formed in a hollow cylindrical shape. The locking member 30 may be in close contact with or separated from an inner circumferential surface of the pipe member 10.

The locking member 30 may be made of an elastically deformable material. The locking member 30 may include a first end connected to the moving member 20 and a second end connected to the transmitting member 40 in such a manner that the locking member 30 is elastically deformed by external force transmitted to the transmitting member 40 and is decreased in diameter.

The locking member 30 may include a locking part 31 having an arc-shaped cross-section which protrudes outwardly so as to be easily elastically deformed and having a larger diameter than an inner diameter of the pipe member 10, a first inserting protrusion 32 provided at the first end of the locking member 30 so that the first end of the locking member 30 is fixedly connected to the moving member 20, and a second inserting protrusion 33 provided at the second end of the locking member 30 so that the second end of the locking member 30 is fixedly connected to the transmitting member 40.

As the locking part 31 may have a larger diameter than the inner diameter of the pipe member 10, the locking part 31 may be located inside the pipe member 10 in a partially elastically deformed state. Accordingly, frictional force may be applied between the locking part 31 and the inner circumferential surface of the pipe member 10 by an elastic restoring force of the locking member 30.

The moving member 20 may include a supporting part 21 provided at an end portion thereof to support the first end of the locking member 30. The supporting part 21 may be formed with a first slot 21a such that the first inserting protrusion 32 of the locking member 30 may be inserted into and engaged with the first slot 21a.

The transmitting member 40 may be formed in a ring shape, and may be slidably mounted around the moving member 20. The transmitting member 40 may be formed with a second slot 41 at an inner surface of a first end portion thereof which may be in contact with the second end of the locking member 30. The second inserting protrusion 33 of the locking member 30 may be inserted into and engaged with the second slot 41 of the transmitting member 40. The external force supplied through the cable 50 may be transmitted to the locking member 30 in a circumferentially dispersed manner by the transmitting member 40. Accordingly, the locking member 30 may be evenly deformed in a circumferential direction.

The cable 50 may be connected to a second end portion of the transmitting member 40 to apply force to the transmitting member 40, such that the transmitting member 40 moves along the moving member 20. At this time, because the second end of the locking member 30 may be connected to the transmitting member 40, movement of the transmitting member 40 may cause the locking part 31 of the locking member 30 to be elastically deformed and decreased in diameter.

Hereinafter, operation of the locking device for a pipe member according to an embodiment of the present inventive concept will be explained in detail with reference to the drawings.

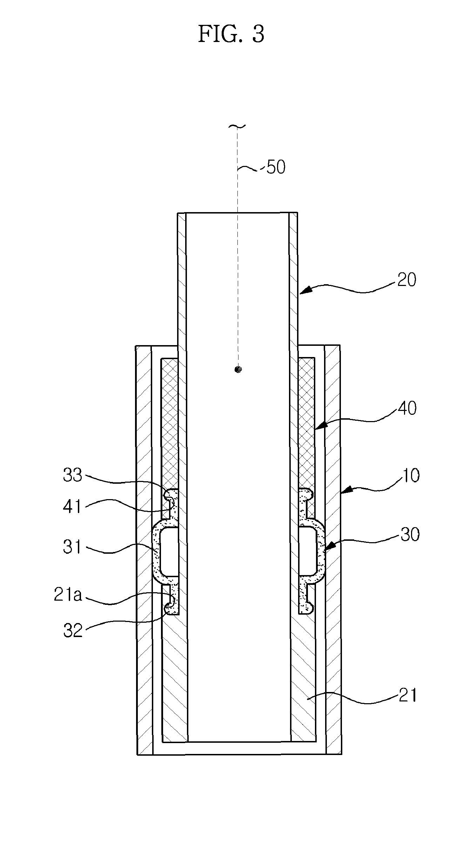

As shown in FIG. 3, when the moving member 20 is located in a certain position, an outer circumferential surface of the locking part 31 of the locking member 30 may be kept in a close contact with the inner circumferential surface of the pipe member 10. Because the locking part 31 may be disposed in a partially elastically deformed state inside the pipe member 10, frictional force may be applied between the locking part 31 and the inner circumferential surface of the pipe member 10 by an elastic restoring force of the locking part 31, thereby restricting movement of the moving member 20.

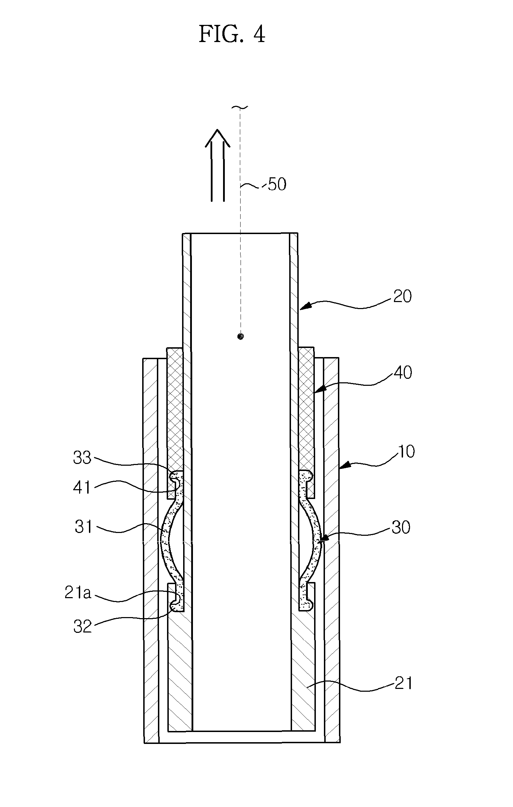

If a user applies a force to a handle or the like in order to move the moving member 20, the force may be transmitted to the transmitting member 40 through the cable 50, and the transmitting member 40 may move along an outer surface of the moving member 20 as shown in FIG. 4. Because the second end of the locking member 30 may be connected to the transmitting member 40, the second end of the locking member 30 may also move with the transmitting member 40. Accordingly, the locking part 31 of the locking member 30 may be elastically deformed and decreased in diameter. The decrease of the diameter of the locking part 31 may cause the outer circumferential surface of the locking part 31 to separate from the inner circumferential surface of the pipe member 10. Because movement of the moving member 20 is not restricted by the locking member 30, the moving member 20 may move in the pipe member 10 by the force exerted on the moving member 20 by a user.

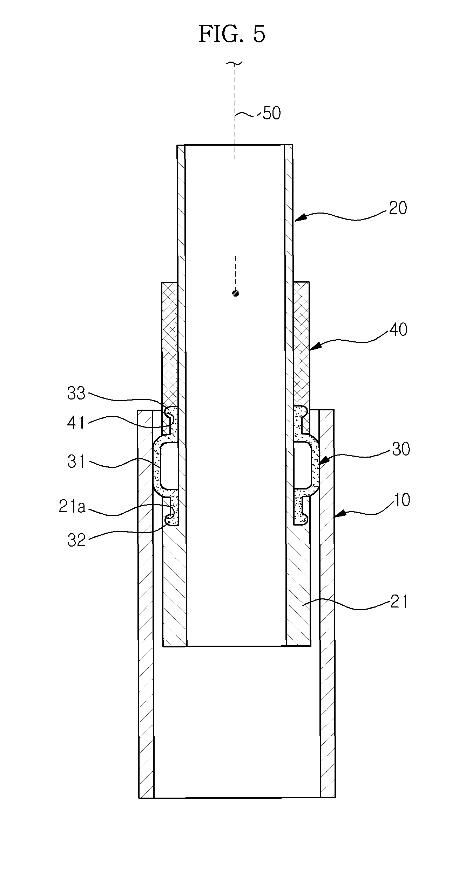

After the moving member 20 moves to a desired position, if a user releases the force applied to the handle, as shown in FIG. 5, the locking part 31 of the locking member 30 may be elastically restored, and the diameter thereof may be increased to an original size. Accordingly, the outer circumferential surface of the locking part 31 may come into close contact with the inner circumferential surface of the pipe member 10 again, thereby restricting movement of the moving member 20.

Although a few embodiments of the present inventive concept have been shown and described, it would be appreciated by those skilled in the art that changes may be made in these embodiments without departing from the principles and spirit of the inventive concept, the scope of which is defined in the claims and their equivalents.

## Claims

1. A locking device for a pipe member, comprising:
a pipe member;
a moving member, at least a portion of which is slidably disposed in the pipe member; and
a locking member coupled to an end portion of the moving member, the locking member being made of an elastically deformable material and having an outer circumferential surface supported by an inner surface of the pipe member, wherein
when an external force is transmitted to the locking member, the locking member is elastically deformed and is decreased in diameter.

2. The locking device for a pipe member according to claim 1, further comprising:
a transmitting member disposed in a ring shape, the transmitting member being slidably disposed around the moving member and connected to the locking member in order to transmit the external force to the locking member; and
a cable connected to the transmitting member in order to transmit the external force to the transmitting member.

3. The locking device for a pipe member according to claim 2, wherein the locking member includes a locking part configured to separate from the inner surface of the pipe member while being elastically deformed and decreased in diameter.

4. The locking device for a pipe member according to claim 3, wherein the locking part has an arc-shaped cross-section which protrudes outwardly such that the locking part is elastically deformed.

5. The locking device for a pipe member according to claim 3, wherein the locking part has a larger diameter than an inner diameter of the pipe member such that the locking part is supported by the inner surface of the pipe member in an elastically deformed state.

6. The locking device for a pipe member according to claim 2, wherein:
the locking member includes a first inserting protrusion disposed at a first end of the locking member to be connected to the moving member, and a second inserting protrusion disposed at a second end of the locking member to be connected to the transmitting member,
the moving member includes a first slot such that the first inserting protrusion is inserted in and engaged with the first slot, and
the transmitting member includes a second slot such that the second inserting protrusion is inserted in and engaged with the second slot.
